# EUROPÄISCHE PATENTANMELDUNG

(11) **EP 3 616 774 A1**
(43) Veröffentlichungstag der Anmeldung: **04.03.2020**
(21) Anmeldenummer: 18020424.0
(22) Anmeldetag: 03.09.2018
(51) Int. Cl.: B01D 53/64, B01D 53/52

(54) **VERFAHREN UND VORRICHTUNG ZUR ABTRENNUNG VON METALLCARBONYLEN AUS EINEM GASGEMISCH**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt am Main (DE); Gubrinski, Alfred, 64390 Erzhausen (DE); Schmidt, Sophia, D-60486 Frankfurt am Main (DE)
(74) Vertreter: Stang, Stefan

(57) **Zusammenfassung**

Die Erfindung betrifft ein Verfahren zur Abtrennung von Metallcarbonylen aus einem Gasgemisch. Das Gasgemisch wird einer Gaswäsche in einem Absorber mit Methanol als physikalisch wirkender Waschflüssigkeit unterzogen, wobei beladenes Methanol erhalten wird. Die Metalle der Metallcarbonyle werden zumindest teilweise als Metallsulfide aus dem beladenen Methanol ausgefällt, wobei eine Metallsulfide und zumindest einen Anteil des beladenen Methanols aufweisende erste Suspension erhalten wird. Die erste Suspension wird einem Aufbereitungsbehälter zugeführt und dort im Gegenstromverfahren in direkten Kontakt mit Wasserdampf gebracht, wodurch eine wenigstens Wasser, Methanol und Metallsulfide aufweisende zweite Suspension und ein gasförmiges Produkt erhalten werden. Die zweite Suspension und das gasförmige Produkt werden als getrennte Ströme aus dem Aufbereitungsbehälter abgezogen. Die Erfindung betrifft ferner eine Vorrichtung zur Durchführung des erfindungsgemäßen Verfahrens und die Verwendung des erfindungsgemäßen Verfahrens oder der Vorrichtung in einem in einem Gaswäscheverfahren mit Methanol als Waschflüssigkeit.

## Beschreibung

### Technisches Gebiet der Erfindung

Die Erfindung betrifft ein Gaswäsche-Verfahren zur Abtrennung von Metallcarbonylen aus einem Gasgemisch, bei dem Metallcarbonyle als Metallsulfide zumindest teilweise aus beladenem Methanol ausgefällt werden. Die Erfindung betrifft ferner eine Vorrichtung zur Durchführung eines solchen Verfahrens und die Verwendung des Verfahrens oder der Vorrichtung in einem Gaswäscheverfahren mit Methanol als Waschflüssigkeit.

### Stand der Technik

Verfahren zur Abtrennung von unerwünschten Begleitstoffen aus technischen Rohgasen mittels physikalischer oder chemischer Absorption sind aus dem Stand der Technik bekannt. So können mit solchen Verfahren unerwünschte, saure Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch Carbonylsulfid (COS) und Cyanwasserstoff (HCN), von den erwünschten Synthesegasbestandteilen wie Wasserstoff (H₂) und Kohlenmonoxid (CO) bis in den Spurenbereich entfernt werden.

Ein bekanntes und häufig angewendetes Verfahren ist das Rectisol-Verfahren, das in Ullmann's Encyclopedia of Industrial Chemistry, 6. Aufl. Bd. 15, S. 399 ff. grundsätzlich beschrieben wird. Im Rectisol-Verfahren erfolgt die Aufnahme der oben erwähnten, unerwünschten Störkomponenten durch kaltes, das heißt signifikant unter Umgebungstemperatur abgekühltes Methanol als Absorbens oder Waschmittel, wobei in einer Absorberkolonne, auch als Absorber oder Waschkolonne bezeichnet, ein intensiver Stoffaustausch zwischen dem Rohgas und dem Absorbens beziehungsweise Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität aufzuweisen, womit es auch bei niedrigen Temperaturen großtechnisch verwendbar ist.

Bei der Herstellung von Synthesegas aus Brennstoffen mit metallischen Spurenkomponenten entstehen Metallcarbonyle, die den Einsatz von Synthesegas bei einer Vielzahl von chemischen Herstellungsverfahren beeinträchtigen können. Bei den Metallcarbonylen handelt es sich um Komplexverbindungen, in denen Kohlenmonoxid (CO) koordinativ an ein Metallatom gebunden ist. Insbesondere handelt es sich bei den Metallcarbonylen um Nickelcarbonyle, zum Beispiel Tetracarbonylnickel(0) ([Ni(CO)₄]), und Eisencarbonyle, zum Beispiel Pentacarbonyleisen(0) ([Fe(CO)₅]). Insbesondere beim Verwenden physikalisch wirkender Waschmittel wie Methanol können Metallcarbonyle beim Regenerieren des Waschmittels, beispielsweise bei der Heißregenerierung, zu Problemen führen, da sich Metallcarbonyle vorzugsweise in heißen Bereichen einer Gaswäscheanlage mit im beladenen Waschmittel enthaltenem Schwefelwasserstoff (H₂S) zu Metallsulfiden umsetzen. Dabei ist die zugrundeliegende Gleichgewichtsreaktion auch von der schlechten Löslichkeit der Metallsulfide getrieben, die durch Ausfällen aus dem Reaktionsgleichgewicht entfernt werden, wie beispielhaft anhand der Reaktion zwischen Pentacarbonyleisen(0) und Schwefelwasserstoff (H₂S) zu Eisen(ll)sulfid, Kohlenmonoxid und Wasserstoff gezeigt:

Fe(CO)₅ + H₂S ⇄ FeS↓+ 5 CO + H₂

Da Metallsulfide praktisch in allen gängigen Lösungsmitteln schwerlöslich bis unlöslich sind, tritt bei allen metallcarbonyl- und schwefelwasserstoffhaltigen Rohsynthesegasen in den Gaswäscheverfahren das Problem auf, dass Metallsulfide durch Ablagerungen zu Verlegungen und Verstopfungen der betroffenen Anlagenteile führen können.

Die WO 98/47602 sieht zur Entfernung von Metallcarbonylen ein Verfahren vor, in dem die obige Gleichgewichtsreaktion durch Entfernung von Kohlenmonoxid beispielsweise mittels Strippen aus dem Waschmittel auf die Seite der Metallsulfide verschoben wird, wodurch ein beabsichtigtes Ausfällen der Metallsulfide aus dem Waschmittel herbeigeführt wird. Dafür wird das beladene Waschmittel in einen Entspannungsbehälter hinein entspannt, wodurch ein Entspannungsgas freigesetzt wird, das auch Kohlenmonoxid (CO) enthält. Das um eine bestimmte CO Menge verarmte Waschmittel wird anschließend in einen Reaktions- und Absetzbehälter überführt, in dem die Metallcarbonyle in Abhängigkeit von der Verweilzeit im Behälter und der Art des Metalls weitgehend vollständig durch Fällung als Metallsulfide aus dem Waschmittel entfernt werden. Der Überstand, das von Metallcarbonylen weitgehend befreite Waschmittel, wird anschließend einer Heißregenerierung zugeführt.

Das Präzipitat, der Metallsulfide enthaltende Schlamm oder "Sulfidschlamm", wird in einem beheizten Aufbereitungsbehälter weiter verarbeitet, in dem das Waschmittel insbesondere durch einen indirekten Wärmetauscher verdampft und einer Heißregenerierung zugeführt wird, in der einerseits Waschmittel zurückgewonnen und andererseits insbesondere Schwefelwasserstoff aus dem beladenen Waschmittel freigesetzt wird. Der dabei gewonnene Schwefelwasserstoff kann beispielsweise einer Claus-Anlage zur Herstellung von Schwefel zugeführt werden.

Das aus dem Stand der Technik bekannte Verfahren zur Aufbereitung des Sulfidschlamms weist jedoch den Nachteil auf, dass zum Erzeugen des dampfförmigen Waschmittels aus dem Sulfidschlamm ein indirekter Wärmetauscher Verwendung findet. Da als indirekte Wärmetauscher üblicherweise Rohrbündelwärmetauscher zum Einsatz kommen, die über eine große Anzahl von Einbauten (Rohre des Rohrbündels, Umlenkbleche) verfügen, kann es leicht zu Verstopfungen der Einbauten des Rohrbündelwärmetauschers durch anhaftende Sulfide kommen. Das Problem tritt verstärkt dadurch auf, da Metallsulfide in reinem Methanol zwar als Suspension, jedoch in fein dispergierter Form vorliegen. Es ist bekannt, dass Methanol-Suspensionen von Metallsulfiden aus diesem Grund zur Adhäsion der Metallsulfide an Metalloberflächen des betroffenen Anlagenbauteils neigen.

Ferner sieht das Verfahren gemäß der WO 98/47602 den Einsatz von Waschwasser bezüglich des Sulfidschlamms im Aufbereitungsbehälter vor. Dadurch wird Cyanwasserstoff (HCN) als unerwünschter Bestandteil mit dem Waschwasser und dem Sulfidschlamm aus dem Aufbereitungsbehälter ausgeleitet. Aufgrund der hohen Toxizität von HCN ist dabei eine weitere Aufbereitung des Sulfidschlamm aufweisenden Abwassers erforderlich. Wünschenswert ist jedoch, dass der im Rohsynthesegas enthaltende Cyanwasserstoff die betreffende Anlage mit dem als Nebenprodukt erzeugten Schwefelwasserstoff, auch als "Claus-Gas" bezeichnet, verlässt.

Somit besteht Bedarf nach einem Verfahren oder einer Vorrichtung, welches/welche bei der Aufarbeitung des Sulfid-Schlamms das Anhaften der Sulfide an Metalloberflächen verhindert und gleichzeitig das Anfallen toxischer Abwässer vermeidet.

### Beschreibung der Erfindung

Die Aufgabe der vorliegenden Erfindung besteht also darin, die vorgenannten Nachteile des Standes der Technik zumindest teilweise zu überwinden.

Insbesondere besteht eine Aufgabe der vorliegenden Erfindung darin, ein Verfahren anzugeben, das die Probleme des Anhaftens von aus Metallcarbonylen ausgefällten Metallsulfiden in Anlagenkomponenten, insbesondere in indirekten Wärmetauschern, weitgehend vermeidet.

Eine Aufgabe der vorliegenden Erfindung besteht ferner darin, ein Gaswäsche-Verfahren anzugeben, das das Anfallen toxischer Abwässer weitgehend vermeidet.

Eine Aufgabe der vorliegenden Erfindung besteht ferner darin, eine Vorrichtung und/oder eine Verwendung anzugeben, welche die obigen Aufgaben zumindest teilweise löst.

Die Aufgabe der Erfindung wird gelöst durch ein Verfahren zur Abtrennung von Metallcarbonylen aus einem Gasgemisch, bei dem das Gasgemisch in einem Absorber einer Gaswäsche mit Methanol als physikalisch wirkender Waschflüssigkeit unterzogen wird, wobei beladenes Methanol erhalten wird, und bei dem die Metalle der Metallcarbonyle zumindest teilweise als Metallsulfide aus dem beladenen Methanol ausgefällt werden, wobei eine erste Suspension erhalten wird, die die Metallsulfide und zumindest einen Anteil des beladenen Methanols aufweist, und die erste Suspension einem Aufbereitungsbehälter zugeführt wird. Erfindungsgemäß ist vorgesehen, dass die erste Suspension in dem Aufbereitungsbehälter im Gegenstromverfahren in direkten Kontakt mit Wasserdampf gebracht wird, wodurch eine wenigstens Wasser, Methanol und Metallsulfide aufweisende zweite Suspension und ein gasförmiges Produkt erhalten werden, und die zweite Suspension und das gasförmige Produkt als getrennte Ströme aus dem Aufbereitungsbehälter abgezogen werden.

Die erste Suspension enthält die zumindest teilweise als Metallsulfide ausgefällten Metallcarbonyle aus dem Gasgemisch sowie zumindest einen Anteil des beladenen Methanols. Bei dem Gasgemisch kann es sich dabei um ein Rohsynthesegas handeln, das zumindest die Komponenten Wasserstoff (H₂), Kohlenmonoxid (CO), Schwefelwasserstoff (H₂S) und Kohlendioxid (CO₂) aufweist. Bei dem beladenen Methanol handelt es sich um ein mit zumindest einer gasförmigen Komponente des Gasgemischs, insbesondere des Rohsynthesegases beladenes Methanol, insbesondere mit einer sauren Komponenten beladenes Methanol, insbesondere mit Schwefelwasserstoff (H₂S) und/oder Kohlendioxid (CO₂) beladenes Methanol.

Die erste Suspension wird im Aufbereitungsbehälter im Gegenstromverfahren in direkten Kontakt mit Wasserdampf gebracht. Unter "Gegenstromverfahren" und "direkter Kontakt" ist dabei zu verstehen, dass die erste Suspension und der Wasserdampf gemäß dem Gegenstromprinzip in entgegengesetzter Richtung derart aneinander vorbeigeführt werden, dass Stoff- und Wärmetausch zwischen der ersten Suspension und dem Wasserdampf ermöglicht wird. Durch den direkten Kontakt zwischen erster Suspension und Wasserdampf wird ein Stoffaustausch ermöglicht, der bei indirektem Kontakt nicht möglich wäre. Der Begriff "Gegenstromverfahren" inkludiert dabei auch Verfahren, bei denen das Gegenstromprinzip zumindest teilweise realisiert wird, das heißt die erste Suspension in dem Aufbereitungsbehälter zumindest teilweise im Gegenstromverfahren in direkten Kontakt mit Wasserdampf gebracht wird.

Dabei werden in dem beladenen Methanol gelöste Komponenten durch den Wasserdampf ausgetrieben (gestrippt), wobei ein gasförmiges Produkt erhalten wird, das als Strom aus dem Aufbereitungsbehälter abgezogen wird. Untersuchungen haben gezeigt, dass die in der ersten Suspension enthaltenen Sulfide weitgehend in die wässrige Phase überführt werden. Dabei wird eine zweite Suspension erhalten, die insbesondere aus dem Wasserdampf kondensiertes Wasser, die Metallsulfide und Methanol enthält, wobei das Methanol durch den Wasserdampf regeneriertes Methanol aufweist.

Das in der zweiten Suspension enthaltene Wasser kann aus dem Wasserdampf kondensiertes Wasser aufweisen, wobei das Wasser der zweiten Suspension dann zumindest teilweise das aus dem Wasserdampf kondensierte Wasser aufweist. Zusätzlich kann das Wasser der zweiten Suspension auch bereits mit dem Gasgemisch, insbesondere dem Rohsynthesegas, eingeschlepptes Wasser enthalten.

Das aus dem Wasserdampf kondensierte Wasser wird dabei vornehmlich durch Kühlung durch das beladene Methanol durch direkten Wärmeaustausch kondensiert. Dabei wird Methanol teilweise verdampft und als Methanol-Dampf mit dem gasförmigen Produkt aus dem Aufbereitungsbehälter abgezogen. Die wenigstens Wasser, Methanol und Metallsulfide enthaltende zweite Suspension wird als von dem gasförmigen Produkt getrennter Strom aus dem Aufbereitungsbehälter abgezogen. Unter "getrennten Strömen" ist zu verstehen, dass die beiden Ströme oder Stoffströme insbesondere als räumlich voneinander getrennte Ströme aus dem Aufbereitungsbehälter abgezogen werden, so dass kein Stoffaustausch zwischen den abgezogenen Strömen möglich ist.

Der dem Aufbereitungsbehälter zugeführte Wasserdampf kann auch als Direktdampf, Frischdampf oder live steam bezeichnet werden.

Das erfindungsgemäße Verfahren weist den Vorteil auf, dass durch die Verwendung von Wasserdampf im direkten Kontakt mit der Metallsulfide enthaltenden ersten Suspension weniger Ablagerungen von Sulfiden im Aufbereitungsbehälter und damit weniger Verstopfungen verursacht werden. Untersuchungen haben gezeigt, dass durch den Wasserdampf ein Reinigungseffekt erzielt wird. Dies führt zu längeren Reinigungsintervallen, und damit weniger Stillständen der betroffenen Anlage. Der Reinigungseffekt basiert vornehmlich darauf, dass Partikel der Metallsulfide in reinem oder im Wesentlichen reinem Methanol und in wässriger Methanol-Lösung ein unterschiedliches Verhalten aufweisen. In reinem Methanol sind die Partikel der Metallsulfide überwiegend fein dispergiert, weisen also nur eine geringe Sedimentationsneigung auf. Vielmehr besitzen die Partikel in reinem Methanol dispergiert eine Neigung zur Adhäsion an Oberflächen. In wässriger Methanol-Lösung erfolgt dagegen mit steigendem Wassergehalt eine Agglomeration kleinerer Partikel der Metallsulfide zu größeren Aggregaten, die eine höhere Sedimentations- und geringere Adhäsionsneigung aufweisen. Dieser Effekt kommt auch dadurch zustande, dass die Metallsulfide beim Kontakt mit Wasserdampf in die wässrige Phase überführt werden.

Unter wässriger Methanol-Lösung wird dabei eine beliebige Mischung aus Wasser und Methanol verstanden. Vorzugsweise weist die wässrige Methanol-Lösung einen Wassergehalt von wenigstens 5 Gew.-% auf, besonders bevorzugt einen Wassergehalt von wenigstens 10 Gew.-%, oder 25 Gew.-%, oder 50 Gew.-%, oder 65 Gew.-%.

Ein weiterer Vorteil des erfindungsgemäßen Verfahrens kann darin gesehen werden, dass kein gesonderter indirekter Wärmetauscher zum Verdampfen des Methanols zur Heißregenerierung benötigt wird. Aus den oben gesagten Gründen können indirekte Wärmetauscher insbesondere beim Durchpumpen von Metallsulfide enthaltenden Suspensionen leicht verstopfen.

Das beladene Methanol der ersten Suspension wird durch den direkten Kontakt mit Wasserdampf gestrippt und dadurch regeneriert. Anschließend kann die das regenerierte Methanol aufweisende zweite Suspension unmittelbar einer Destillationskolonne zur Methanol-Wasser-Trennung zugeführt werden, die in der Regel Teil einer entsprechenden Gaswäsche-Anlage ist.

Ein weiterer Vorteil des erfindungsgemäßen Verfahrens kann darin gesehen werden, dass durch das in direkten Kontakt bringen der ersten Suspension mit Wasserdampf, oder Strippen der ersten Suspension mit Wasserdampf, auch (gasförmige) Schadstoffe wie Cyanwasserstoff (HCN) aus der ersten Suspension entfernt werden, so dass eine Aufbereitung HCN-belasteter Abwässer nicht erforderlich ist. Der Cyanwasserstoff kann in Verbindung mit ebenfalls aus dem Methanol der ersten Suspension ausgestrippten Schwefelwasserstoff als im gasförmigen Produkt enthaltenes Wertgas unmittelbar weiterverarbeitet werden, beispielsweise zusammen mit gewonnenem Schwefelwasserstoff als Claus-Gas eine Claus-Anlage zur Herstellung von Schwefel zugeführt werden.

Eine bevorzugte Ausführungsform des erfindungsgemäßen Verfahrens ist dadurch gekennzeichnet, dass die einen Anteil des beladenen Methanols aufweisende erste Suspension dem Aufbereitungsbehälter zugeführt wird, und der Rest des beladenen Methanols einer Regenerierung zugeführt wird, bevorzugt einer Heißregenerierung zugeführt wird.

Vorzugsweise weist die erste Suspension nicht die Gesamtmenge des Methanols auf, aus der die Metallcarbonyle als Metallsulfide ausgefällt werden. Vielmehr hat es sich als vorteilhaft erwiesen, die Fällung der Metallsulfide beispielsweise in einem vorgeschalteten Verweilzeitbehälter, insbesondere einem Reaktions- und Absetzbehälter, ablaufen zu lassen, und anschließend nur das den Großteil der Sulfide aufweisende Sediment, auch als Präzipität bezeichnet, in den Aufbereitungsbehälter zu überführen. Die in der Regel größere beladene Methanol-Menge des Überstands wird unmittelbar einer Vorrichtung zur Regenerierung zugeführt, insbesondere einer Vorrichtung zur Heißregenerierung. Vorzugsweise liegt der Anteil des in der ersten Suspension enthaltenen beladenen Methanols an der Gesamtmenge des beladenen Methanols bei weniger als 10 Gew.-%, vorzugsweise bei weniger als 5 Gew.-%, oder weniger als 3 Gew.-%, oder weniger als 1 Gew.-%.

Eine bevorzugte Ausführungsform des erfindungsgemäßen Verfahrens ist dadurch gekennzeichnet, dass das gasförmige Produkt ein Gemisch aus Schwefelwasserstoff (H₂S) und Methanol-Dampf aufweist.

Wird das zur Fällung der Metallcarbonyle als Metallsulfide verwendete beladene Methanol dem Bereich des Absorbers entnommen, der hauptsächlich der Entschwefelung dient, so weist das gasförmige Produkt ein Gemisch aus Schwefelwasserstoff (H₂S) und Methanol-Dampf auf. Das gasförmige Produkt enthält stets eine gewisse Menge an dampfförmigem Waschmittel, hier Methanol-Dampf, das durch Verdampfen des Waschmittels beim direkten Kontakt der ersten Suspension mit Wasserdampf entsteht. Vorzugsweise wird das Schwefelwasserstoff (H₂S) und Methanol-Dampf enthaltende gasförmige Produkt anschließend einem mehrstufigen Prozess zum Auskondensieren von Methanol zugeführt. Anschließend kann das von Methanol-Dampf befreite gasförmige Produkt, das nunmehr vorzugsweise nur noch Schwefelwasserstoff aufweist, einer Claus-Anlage zur Herstellung von Schwefel zugeführt werden.

Eine bevorzugte Ausführungsform des erfindungsgemäßen Verfahrens ist somit dadurch gekennzeichnet, dass Methanol aus dem Methanol-Dampf des gasförmigen Produkts auskondensiert wird, und der verbleibende Schwefelwasserstoff (H₂S) zur weiteren Verarbeitung einer Claus-Anlage zugeführt wird.

Das zur Fällung der Metallcarbonyle als Metallsulfide verwendete beladene Methanol kann auch einem Bereich des Absorbers entnommen werden, der hauptsächlich der Entfernung von Cyanwasserstoff (HCN) und weiterer Spurenbestandteile dient. Das gasförmige Produkt enthält dann neben Methanol-Dampf auch gasförmigen Cyanwasserstoff. Ebenfalls anwendbar sind Kombinationen aus beiden Ausführungsformen, so dass das gasförmige Produkt zumindest Schwefelwasserstoff, Cyanwasserstoff und Methanol-Dampf enthält.

Eine bevorzugte Ausführungsform des erfindungsgemäßen Verfahrens ist dadurch gekennzeichnet, dass das gasförmige Produkt aus einem Kopf-Bereich des Aufbereitungsbehälters abgezogen wird und/oder die zweite Suspension aus einem Sumpf-Bereich des Aufbereitungsbehälters abgezogen wird.

Dabei wird unter einem Kopf-Bereich der obere Bereich des Aufbereitungsbehälters verstanden. Der Aufbereitungsbehälter kann als Kolonne, insbesondere als sogenannte Stripp-Kolonne ausgestaltet sein. Unter einem Sumpf-Bereich wird der untere Bereich des Aufbereitungsbehälters oder der Kolonne verstanden.

Der Wasserdampf wird dem Aufbereitungsbehälter vorzugsweise ebenfalls in einem Sumpf-Bereich des Aufbereitungsbehälters zugeführt. Die erste Suspension wird dem Aufbereitungsbehälter vorzugsweise in einem Kopf-Bereich des Aufbereitungsbehälters zugeführt, so dass ein möglichst intensiver Wärme- und Stoffaustausch zwischen erster Suspension und Wasserdampf bei Führung gemäß dem Gegenstromprinzip ermöglicht wird.

Eine bevorzugte Ausführungsform des erfindungsgemäßen Verfahrens ist dadurch gekennzeichnet, dass die zweite Suspension einer Destillation zugeführt wird, insbesondere einer Gegenstromdestillation, wobei im Wesentlichen reines Methanol als Kopfprodukt und ein im Wesentlichen Metallsulfide und Wasser aufweisendes Gemisch als Sumpfprodukt erhalten werden. Vorteilhaft ist dabei, dass aufgrund der Anreicherung von Wasser im Sumpf der Methanol/Wasser-Kolonne das oben erörterte, vorteilhafte Verhalten der Metallsulfid-Partikel in Kontakt mit Wasser in noch stärkerem Maße auftritt.

Insbesondere handelt es sich bei der Destillation um eine Rektifikation zur Trennung von Wasser und Methanol. Das bei der Destillation oder Rektifikation erhaltene reine Methanol kann anschließend einer Heißregenerierung und anschließend dem Absorber zur erneuten Beladung zugeführt werden. Das Sumpfprodukt, welches im Wesentlichen Metallsulfide und Wasser aufweist, wird entsorgt. Die Angabe "im Wesentlichen" bedeutet in diesem Zusammenhang, dass der Anteil des jeweiligen Produkts oder der Produkte wenigstens 95 Gew.-% aufweist, vorzugsweise wenigstens 99 Gew.-%, besonders bevorzugt wenigstens 99,5 Gew.-%.

Eine bevorzugte Ausführungsform des erfindungsgemäßen Verfahrens ist dadurch gekennzeichnet, dass die erste Suspension dem Aufbereitungsbehälter aus wenigstens einem Verweilzeitbehälter zugeführt wird.

Der Verweilzeitbehälter weist vorzugsweise eine Reaktions- und Absetzzone auf. In der Reaktionszone bilden sich die Metallsulfide aufgrund des in einem vorangegangenen Schritt erfolgten Strippen von Kohlenmonoxid (CO) und der vorherrschenden Temperatur, welche die Fällung der Metallsulfide fördert. In der Absetzzone sedimentieren die in der Reaktionszone gebildeten Metallsulfide. Die Absetzzone kann beispielsweise konisch, sich nach unten hin verjüngend, ausgestaltet sein. In dem wenigstens einen Verweilzeitbehälter wird dafür gesorgt, dass das beladene Methanol langsam vom Einlass zum Auslass fließt, so dass die in der Reaktionszone gebildeten Metallsulfide möglichst ungehindert in der Absetzzone sedimentieren können. Die sich in der Absetzzone sammelnde erste Suspension wird anschließend vom Auslass des Verweilzeitbehälters dem Aufbereitungsbehälter zugeführt.

Eine bevorzugte Ausführungsform des erfindungsgemäßen Verfahrens ist dadurch gekennzeichnet, dass die erste Suspension dem Aufbereitungsbehälter aus wenigstens zwei separaten Verweilzeitbehältern zugeführt wird.

Bei den im Gasgemisch enthaltenen Metallcarbonylen handelt es sich vor allem um Eisen- und Nickelcarbonyle. Dabei weisen Eisen- und Nickelcarbonyle eine stark unterschiedliche Löslichkeit in Methanol auf. Eisencarbonyle weisen eine um einen Faktor von circa 100 höhere Löslichkeit als Nickelcarbonyle auf. Aus diesem Grund können die Eisencarbonyle in vorteilhafter Weise bereits mit dem sogenannten prewash Methanol im Absorber oder der Absorptionskolonne entfernt werden. Das prewash Methanol dient vornehmlich der Entfernung von HCN und weiteren Spurenbestandteilen (wie beispielsweise Carbonylsulfid) aus dem Gasgemisch. Nickelcarbonyle werden in vorteilhafter Weise in einem getrennten Kreislauf mit demjenigen Methanol der Absorptionskolonne entfernt, das vornehmlich der Entfernung von H₂S (Entschwefelung) aus dem Gasgemisch dient. Bei dieser Art der Verfahrensführung hat es sich als vorteilhaft erwiesen, die Eisen- und Nickelcarbonyle entsprechend in voneinander getrennten Verweilzeitbehältern als Eisen- und Nickelsulfide auszufällen. Dementsprechend wird die erste Suspension dem Aufbereitungsbehälter aus wenigstens zwei separaten Verweilzeitbehältern zugeführt. Unter der ersten Suspension ist dabei eine Metallsulfide und beladenes Methanol aufweisende Suspension gemeint, wobei diese erste Suspension in einem Fall hauptsächlich Nickelsulfid und im anderen Fall hauptsächlich Eisensulfid enthält.

Eine bevorzugte Ausführungsform des erfindungsgemäßen Verfahrens ist daher dadurch gekennzeichnet, dass die erste Suspension in einem ersten der wenigstens zwei separaten Verweilzeitbehältern im Wesentlichen Eisensulfide aufweist und die erste Suspension in einem zweiten der wenigsten zwei separaten Verweilzeitbehälter im Wesentlichen Nickelsulfide aufweist.

Dabei ist der Begriff "im Wesentlichen" so zu verstehen, dass die erste Suspension des ersten Verweilzeitbehälters wenigstens 90 Gew.-% Eisensulfid bezogen auf die Gesamtmenge Metallsulfide im ersten Verweilzeitbehälter aufweist, besonders bevorzugt wenigstens 95 Gew.-%, und weiter bevorzugt wenigstens 97,5 Gew.-%. Die erste Suspension des zweiten Verweilzeitbehälters weist wenigstens 95 Gew.-% Nickelsulfid bezogen auf die Gesamtmenge Metallsulfide im zweiten Verweilzeitbehälter auf, bevorzugt wenigstens 99 Gew.-%, besonders bevorzugt wenigstens 99,5 Gew.-%. Dabei sind unter "Eisensulfid" und "Nickelsulfid" alle denkbaren Sulfid-Verbindungen des Eisens und Nickels zu verstehen, beispielsweise kann Eisensulfid sowohl Eisen(II)-sulfid als auch Eisen(III)-sulfid umfassen.

Typische Verweilzeiten der Nickelcarbonyle zur vollständigen Umsetzung zu Nickelsulfid und Sedimentation in der Reaktions- und Absetzzone des Verweilzeitbehälter sind 5 bis 80 Minuten, bevorzugt 15 bis 60 Minuten. Typische Verweilzeiten der Eisencarbonyle zur vollständigen Umsetzung zu Eisensulfid und Sedimentation in der Reaktions- und Absetzzone des Verweilzeitbehälter sind 1 bis 16 Stunden, dabei bevorzugt mindestens 3 Stunden.

Eine bevorzugte Ausführungsform des erfindungsgemäßen Verfahrens ist dadurch gekennzeichnet, dass ein Zulauf des ersten Verweilzeitbehälters zum Aufbereitungsbehälter oberhalb eines Zulaufs des zweiten Verweilzeitbehälters zum Aufbereitungsbehälter angeordnet ist.

Insbesondere wird über den oberhalb des Zulaufs des zweiten Verweilzeitbehälters angeordneten Zulauf des ersten Verweilzeitbehälters zum Aufbereitungsbehälter die hauptsächlich Eisensulfide aufweisende erste Suspension dem Aufbereitungsbehälter zugeführt. Über den Zulauf des zweiten Verweilzeitbehälters zum Aufbereitungsbehälter, der unterhalb des Zulaufs des ersten Verweilzeitbehälters zum Aufbereitungsbehälter angeordnet ist, wird hauptsächlich die Nickelsulfide aufweisende erste Suspension dem Aufbereitungsbehälter zugeführt. Der Aufbereitungsbehälter weist in diesem Fall also zwei räumlich voneinander getrennte Aufgabestutzen für die hauptsächlich Eisensulfid aufweisende erste Suspension und die hauptsächlich Nickelsulfid aufweisende erste Suspension auf, wobei der Stutzen für die Zuführung der hauptsächlich Eisensulfid aufweisenden ersten Suspension oberhalb des Stutzens für die Zuführung der hauptsächlich Nickelsulfid aufweisenden ersten Suspension angeordnet ist. Gleichzeitig ist der Stutzen für die Zuführung des Wasserdampf unterhalb der vorgenannten Stutzen angeordnet.

Dadurch findet bezüglich des Eisensulfids ein längerer Stoff- und Wärmetausch mit dem in einem unteren Bereich oder Sumpfbereich des Aufbereitungsbehälters aufgegebenen Wasserdampfs statt, der den Aufbereitungsbehälter von unten nach oben durchströmt. Die erste Suspension durchströmt den Aufbereitungsbehälter dabei von oben nach unten.

Untersuchungen haben gezeigt, dass Nickelsulfid leichter als Eisensulfid aus Methanol in Wasser "umgefällt" werden kann. Mit anderen Worten, eine Nickelsulfid aufweisende Methanol-Suspension bildet bei Kontakt mit Wasserdampf leichter größere Aggregatedie gut sedimentieren - als dies bei Eisensulfiden der Fall ist. Es ist daher von Vorteil, den Eisensulfiden einen längeren Kontakt mit Wasserdampf im Gegenstromverfahren zur Verfügung zu stellen, so dass auch die Eisensulfide in ausreichender Weise in der zweiten Suspension sedimentieren.

Weitere Untersuchungen haben gezeigt, dass im beladenen Methanol nicht als Metallsulfide ausgefällte Metallcarbonyle in Wasser, insbesondere bei Kontakt mit Wasserdampf, nachträglich zu Metallsulfiden umgesetzt werden. Die Umsetzung der Nickelcarbonyle zu Nickelsulfid findet dabei überraschenderweise wesentlich schneller statt als die Umsetzung der Eisencarbonyle zu Eisensulfid. Auch aus diesem Grund ist es von Vorteil, die hauptsächlich Eisensulfid und nicht umgesetzte Eisencarbonyle aufweisende erste Suspension oberhalb der hauptsächlich Nickelsulfid und nicht umgesetzte Nickelcarbonyle aufweisenden ersten Suspension in den Aufbereitungsbehälter zu geben, damit die nicht umgesetzten Eisencarbonyle länger in Kontakt mit dem von unten nach oben strömenden Wasserdampf stehen als dies bei den nicht umgesetzten Nickelcarbonylen der Fall ist.

Eine bevorzugte Ausführungsform des erfindungsgemäßen Verfahrens ist dadurch gekennzeichnet, dass das Ausfällen der Metallsulfide aus den in dem beladenen Methanol enthaltenen Metallcarbonylen durch Desorption von Kohlenmonoxid (CO) aus dem beladenen Methanol und/oder durch Temperaturerhöhung des beladenen Methanols bewirkt wird.

Durch Desorption von Kohlenmonoxid aus beladener Waschflüssigkeit wird das Gleichgewicht der bereits oben dargestellten Beispielreaktion zur Bildung der Metallsulfide

Fe(CO)₅ + H₂S ⇄ FeSi↓ + 5 CO + H₂

durch Entfernung eines der Reaktionsprodukte (CO) auf die Produktseite verschoben, so dass die Metallsulfide dadurch bevorzugt gebildet werden. Die Umsetzung der Metallcarbonyle zu Metallsulfiden wird ferner durch hohe Temperaturen begünstigt.

Dabei ist eine bevorzugte Ausführungsform des erfindungsgemäßen Verfahrens dadurch gekennzeichnet, dass die Desorption des Kohlenmonoxid (CO) in einem Entspannungsbehälter durch Druckentspannung (Flashen) des beladenen Methanols erfolgt.

Alternativ dazu, oder zusätzlich, kann die Desorption des Kohlenmonoxids durch Strippen mit einem Inertgas erreicht werden. Als Stripp-Gas kommt auch Methanol-Dampf in Frage, was dann einer Heißregenerierung entspricht. Ein Beispiel für ein inertes Stripp-Gas ist Stickstoff.

Eine bevorzugte Ausführungsform des erfindungsgemäßen Verfahrens ist dadurch gekennzeichnet, dass das beladene Methanol nach der Druckentspannung dem wenigstens einen Verweilzeitbehälter zugeführt wird, wobei sich die erste Suspension im wenigstens einen Verweilzeitbehälter bildet.

Um Verlegungen oder Verstopfungen von Anlagenbauteilen zu vermeiden hat es sich als vorteilhaft erwiesen, das beladene und druckentspannte Methanol nach der durch die Druckentspannung bewirkten Desorption von Kohlenmonoxid unmittelbar dem Verweilzeitbehälter zuzuführen.

Vorzugsweise liegt der Druck im Verweilzeitbehälter in einem Bereich von 1 bis 20 bar und vorzugsweise bei zumindest 3 bar, die Temperatur bei üblicherweise 0 bis 150 °C und vorzugsweise bei mindestens 40 °C.

Eine bevorzugte Ausführungsform des erfindungsgemäßen Verfahrens ist dadurch gekennzeichnet, dass der Wasserdampf dem Aufbereitungsbehälter in einem unteren Bereich des Aufbereitungsbehälters zugeführt wird, insbesondere einem Sumpfbereich des Aufbereitungsbehälters zugeführt wird.

Dadurch wird sichergestellt, dass die Zeit für den Stoff- und Wärmeaustausch zwischen dem aufgegebenen Wasserdampf und der vorzugsweise am Kopf-Bereich des Aufbereitungsbehälters aufgegebenen ersten Suspension möglichst lange ist.

Eine bevorzugte Ausführungsform des erfindungsgemäßen Verfahrens ist dadurch gekennzeichnet, dass das Gasgemisch ein Synthesegas umfasst, wobei das Synthesegas als Bestandteile wenigstens Wasserstoff (H₂), Kohlenmonoxid (CO), Kohlendioxid (CO₂), Schwefelwasserstoff (H₂S) und Metallcarbonyle umfasst.

Als weitere Bestandteile können Carbonylsulfid (COS), Mercaptane und/oder Cyanwasserstoff (HCN) im Synthesegas enthalten sein. Optional weist das Synthesegas keinen oder nur in Spuren enthaltenen Schwefelwasserstoff (H₂S) oder kein oder nur in Spuren vorhandenes Kohlendioxid (CO₂) auf.

In einem Beispiel weist das Synthesegas die Bestandteile Wasserstoff (H₂), Kohlenmonoxid (CO), Kohlendioxid (CO₂) und Schwefelwasserstoff (H₂S) auf, wobei Wasserstoff (H₂) und Kohlenmonoxid (CO) nicht zu entfernende Wertgase darstellen und Kohlendioxid (CO₂) und Schwefelwasserstoff (H₂S) zu entfernende saure Gasbestandteile darstellen. Insbesondere Schwefelwasserstoff kann als Nebenprodukt einer Verwertung zur Synthese von Schwefel zugeführt werden und stellt unter diesen Umständen ein Wertgas dar. Die Metallcarbonyle stellen in der Regel keinen Wertstoff dar und werden nach der Fällung als Metallsulfide und entsprechender Aufarbeitung entsorgt.

Die Aufgabe der Erfindung wird ferner gelöst durch eine Vorrichtung zur Abtrennung von Metallcarbonylen aus einem Gasgemisch, in der das Gasgemisch einer Gaswäsche mit Methanol als physikalisch wirkender Waschflüssigkeit unterzogen wird, und in der die Metalle der Metallcarbonyle zumindest teilweise als Metallsulfide aus beladenem Methanol ausfällbar sind, aufweisend folgende miteinander in Fluidverbindung bestehende Bestandteile:
Einen Aufbereitungsbehälter, umfassend Mittel zum Zuführen von Dampf zu dem Aufbereitungsbehälter und Mittel zum Zuführen einer beladenes Methanol und Metallsulfide aufweisenden ersten Suspension zum Aufbereitungsbehälter, wobei die Mittel zum Zuführen des Dampfs und die Mittel zum Zuführen der ersten Suspension so angeordnet sind, dass der Dampf und die erste Suspension innerhalb des Aufbereitungsbehälters im Gegenstrom und in direktem Kontakt unter Stoffaustausch zueinander bewegbar sind;
Mittel zum Abziehen eines gasförmigen Produkts aus dem Aufbereitungsbehälter; Mittel zum Abziehen einer Wasser, Methanol und Metallsulfide aufweisenden zweiten Suspension aus dem Aufbereitungsbehälter.

Eine bevorzugte Ausführungsform der erfindungsgemäßen Vorrichtung ist dadurch gekennzeichnet, dass die Vorrichtung wenigstens einen mit den Mitteln zur Zuführung der ersten Suspension zum Aufbereitungsbehälter in Verbindung stehenden Verweilzeitbehälter aufweist, wobei der Verweilzeitbehälter eine Reaktions- und Absetzzone zum Ausfällen der Metallsulfide aus den Metallcarbonylen aufweist, in der die erste Suspension erzeugbar ist.

Eine bevorzugte Ausführungsform der erfindungsgemäßen Vorrichtung ist dadurch gekennzeichnet, dass die Vorrichtung mindestens zwei separate Verweilzeitbehälter und mit den jeweiligen Verweilzeitbehältern in Verbindung stehende, separate Mittel zur Zuführung der ersten Suspension zum Aufbereitungsbehälter aufweist, wobei in einem ersten Verweilzeitbehälter eine im Wesentlichen Eisensulfide aufweisende erste Suspension erzeugbar ist, und in einem zweiten Verweilzeitbehälter eine im Wesentlichen Nickelsulfide aufweisende erste Suspension erzeugbar ist, wobei die separaten Mittel zur Zuführung der ersten Suspension zum Aufbereitungsbehälter ein erstes und ein zweites Mittel zur Zuführung der ersten Suspensionen zum Aufbereitungsbehälter umfassen, wobei über das erste Mittel die im Wesentlichen Eisensulfide aufweisende erste Suspension dem Aufbereitungsbehälter zuführbar ist und über das zweite Mittel die im Wesentlichen Nickelsulfide aufweisende erste Suspension dem Aufbereitungsbehälter zuführbar ist.

Vorzugsweise ist dabei das erste Mittel im Bereich der Zuführung zum Aufbereitungsbehälter oberhalb des zweiten Mittels angeordnet.

Die Aufgabe der Erfindung wird ferner gelöst durch die Verwendung des erfindungsgemäßen Verfahrens oder der erfindungsgemäßen Vorrichtung in einem Gaswäscheverfahren mit Methanol als Waschflüssigkeit zur Abtrennung von Metallcarbonylen und Schwefelwasserstoff (H₂S) aus einem wenigstens die Bestandteile Wasserstoff (H₂), Kohlenmonoxid (CO), Kohlendioxid (CO₂), Schwefelwasserstoff (H₂S) und Metallcarbonyle aufweisenden Roh-Synthesegases.

### Beispiele

Die Erfindung wird im Folgenden durch Beispiele näher erläutert, ohne den Gegenstand der Erfindung zu beschränken. Weitere Merkmale, Vorteile und Anwendungsmöglichkeiten der Erfindung ergeben sich aus der nachfolgenden Beschreibung der Ausführungsbeispiele in Zusammenhang mit den Zeichnungen.

Es zeigt
- Figur 1: eine schematische Darstellung einer ersten beispielhaften Ausgestaltung des erfindungsgemäßen Verfahrens beziehungsweise der erfindungsgemäßen Vorrichtung,
- Figur 2: eine schematische Darstellung einer zweiten beispielhaften Ausgestaltung des erfindungsgemäßen Verfahrens beziehungsweise der erfindungsgemäßen Vorrichtung,

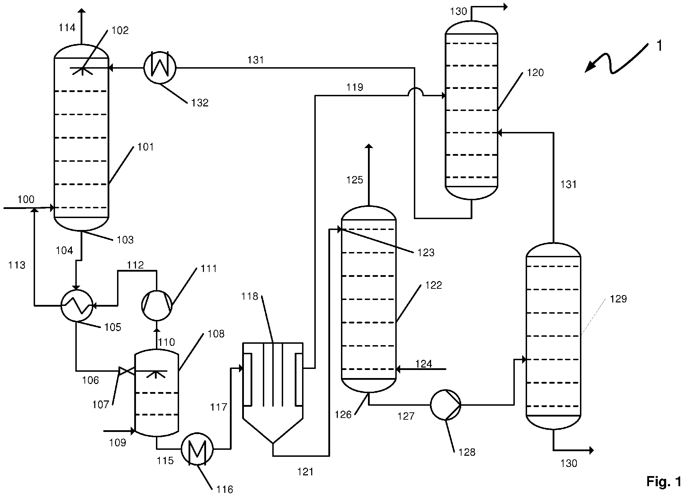

Fig. 1 zeigt schematisch einen Verfahrensablauf 1 beziehungsweise eine Vorrichtung 1 zur Verwendung innerhalb einer Anlage zur Gaswäsche von Rohsynthesegasen mit Methanol als Waschmittel gemäß einem ersten Ausführungsbeispiel der Erfindung.

Über Leitung 100 wird einer Absorptionskolonne 101 bei einem Druck von 40 bar ein Rohsynthesegasgemisch zugeführt, das wenigstens die Komponenten Wasserstoff (H₂) und Kohlenmonoxid (CO) als erwünschte Komponenten sowie Metallcarbonyle, Schwefelwasserstoff (H₂S) und Kohlendioxid (CO₂) als zu entfernende Komponenten enthält. Im Kopfbereich der Absorptionskolonne 101 wird regeneriertes Methanol über den Flüssigkeitsverteiler 102 aufgegeben und strömt in der Absorptionskolonne fein verteilt nach unten, wobei es unerwünschte Bestandteile aus dem Rohsynthesegas aufnimmt. Das Rohsynthesegas durchströmt die Absorptionskolonne 101 von unten nach oben und gibt dabei unerwünschte Bestandteile wie H₂S und CO₂ durch Absorption in Methanol ab. Gereinigtes Synthesegas verlässt die Absorptionskolonne über Leitung 114. Das unter anderem mit H₂S beladene Methanol wird im Sumpfbereich 103 von Absorptionskolonne 101 über Leitung 104 abgezogen, im indirekten Wärmetauscher 105 angewärmt und über Leitung 106 und Entspannungsventil 107 in den Entspannungsbehälter 108 hinein auf einen Druck von 12 bar entspannt. Das dabei nach oben entweichende Entspannungsgas enthält auch CO, wodurch aufgrund der Gleichgewichtsverschiebung der Gleichgewichtsreaktion im beladenen Methanol enthaltene Metallcarbonyle mit dem im beladenen Methanol enthaltenen H₂S zu Metallsulfiden umgesetzt werden. Um das Austreiben von CO zu verstärken wird über die Leitung 109 Stickstoff als Stripp-Gas zugeführt. Die über die Leitung 110 abgezogenen Gase werden über den Verdichter 111 auf 40 bar rückverdichtet, über Leitung 112 dem indirekten Wärmetauscher 105 zum Kühlen zugeführt und anschließend als Recycle-Gasstrom über Leitung 113 mit dem Rohsynthesegasstrom in Leitung 100 zusammengeführt. Das in dem Entspannungsbehälter 108 wenigstens teilweise von CO befreite Methanol wird über Leitung 115 einem indirekten Wärmetauscher 116 zugeführt, dabei erwärmt und über Leitung 117 dem Verweilzeitbehälter 118 zugeführt.

Durch Austreiben von CO im Entspannungsbehälter 108 und zusätzliches Erwärmen des beladenen Methanols im indirekten Wärmetauscher 116 wird die Bildung von Metallsulfiden aus den Metallcarbonylen begünstigt. Der Verweilzeitbehälter 118 verfügt über eine Reaktionszone sowie eine Absetzzone. Das beladene Methanol wird so lange durch die Reaktionszone geleitet wie für die vollständige Fällung der Metallsulfide erforderlich. Anschließend gelangen die ausgefällten Metallsulfide in die Absetzzone, die wie im Beispiel des Verweilzeitbehälters 118 dargestellt als konischer Boden ausgeführt ist, in dem sich die Metallsulfide und ein Anteil des beladenen Methanols als erste Suspension sammeln. Der Hauptanteil des beladenen Methanols, der keine oder nur wenige Sulfide enthaltende Überstand, wird aus dem Verweilzeitbehälter über Leitung 119 abgezogen und Kolonne 120 zur Heißregenerierung zugeführt. Der Sulfidschlamm, die den kleineren Teil des beladenen Methanols und Metallsulfide enthaltende erste Suspension, wird über Leitung 121 Aufbereitungsbehälter 122 bei einem Druck von 10 bar und einer Temperatur von 90 °C zugeführt. Die erste Suspension durchströmt den Aufbereitungsbehälter 122 nach Aufgabe über den Stutzen 123 von oben nach unten. Gleichzeitig wird Aufbereitungsbehälter 122 über Leitung 124 Wasserdampf bei einem Druck von 8 bar und einer Temperatur von 283 °C zugeführt. Wasserdampf durchströmt Aufbereitungsbehälter 122 von unten nach oben, so dass die erste Suspension und der Wasserdampf im Gegenstromverfahren in unmittelbarem Kontakt stehen und ein Stoff- und Wärmetausch zwischen Wasserdampf und erster Suspension ermöglicht wird. Aufgrund des Stoff- und Wärmetauschs zwischen erster Suspension und Wasserdampf gehen die Metallsulfide in die wässrige Phase über, werden also in die wässrige Phase "umgefällt" und bilden dort größere Agglomerate, die eine stärkere Sedimentationsneigung aufweisen als Metallsulfide der methanolischen Suspension (ersten Suspension). Durch Wasserdampf aus Leitung 124 wird Schwefelwasserstoff aus dem über Leitung 121 zugeführten beladenen Methanol ausgetrieben (gestrippt). Der ausgetriebene Schwefelwasserstoff verlässt Aufbereitungsbehälter 122 über Leitung 125 als gasförmiges Produkt.

Die in der Fig. angedeuteten Einbauten in Behälter 122 und Kolonne 129 sind nur schematisch zu verstehen. Der Fachmann wird in der Lage sein, aufgrund seines Fachwissens oder basierend auf Routineversuchen Einbauten auszuwählen, die gleichzeitig einen befiredigenden Stoffübergang zwischen den beteiligten Phasen gestatten und es andererseits ermöglichen, eine Suspension ohne übermäßige Verstopfungsneigung durchzuleiten.

Neben Schwefelwasserstoff enthält gasförmiges Produkt in Leitung 125 auch dampfförmiges Methanol, das aufgrund der Wärmeübertragung des Wasserdampfs auf beladenes Methanol der ersten Suspension erhalten wird. Gasförmiges Produkt in Leitung 125, welches einen Druck von 6,5 bar und eine Temperatur von 129 °C aufweist, wird anschließend einem mehrstufigen Verfahren zur Auskondensation des dampfförmigen Methanols unterworfen (nicht gezeigt). Das dabei hauptsächlich Schwefelwasserstoff aufweisende erhaltene Produkt, auch als Claus-Gas bezeichnet, wird anschließend einer Claus-Anlage zur Herstellung von Schwefel zugeführt.

Aus Sumpfbereich 126 des Aufbereitungsbehälters 122 wird die Wasser, Methanol und Metallsulfide aufweisende zweite Suspension bei einem Druck von 7 bar und einer Temperatur von 143 °C über Leitung 127 mit Hilfe von Pumpe 128 einer Rektifikationskolonne 129 zugeführt. In Rektifikationskolonne 129 findet eine thermische Abtrennung des Methanols von der zweiten Suspension statt. Dabei wird als Sumpfprodukt ein Sulfidschlamm aus Metallsulfiden und Wasser erhalten, der über Leitung 130 abgezogen und der Entsorgung zugeführt wird. Am Kopf von Rektifikationskolonne 129 wird Methanol abgezogen, das über Leitung 131 der Kolonne 120 zur Heißregenerierung zugeführt wird. Die bei der Heißregenerierung erhaltenen Gase werden über Leitung 133 abgezogen und ähnlich dem in Leitung 125 abgezogenen gasförmigen Produkt aufgearbeitet. Heißregeneriertes Methanol verlässt Kolonne 120 über Leitung 131 und wird nach Abkühlen im indirekten Wärmetauscher 132 Absorptionskolonne 101 zur erneuten Absorption nicht erwünschter Bestandteile des Rohsynthesegases zugeführt.

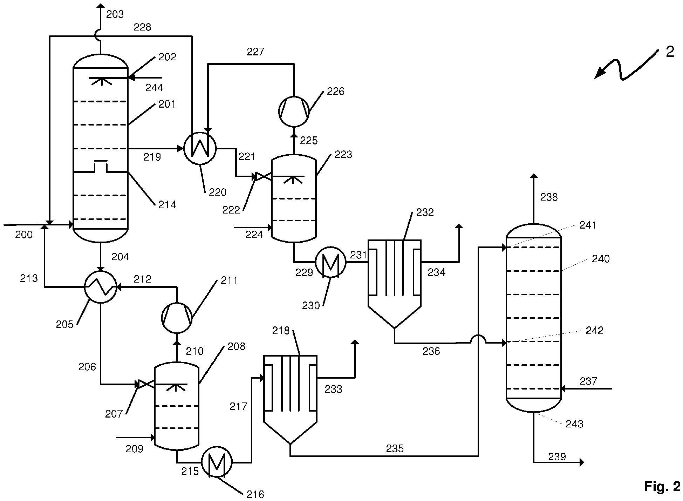

Fig. 2 zeigt schematisch einen Verfahrensablauf 2 beziehungsweise eine Vorrichtung 2 zur Verwendung innerhalb einer Anlage zur Gaswäsche von Rohsynthesegasen mit Methanol als Waschmittel gemäß einem zweiten Ausführungsbeispiel der Erfindung.

Über die Leitung 200 wird einer Absorptionskolonne 201 bei einem Druck von 40 bar ein Rohsynthesegasgemisch zugeführt, das wenigstens die Komponenten Wasserstoff (H₂) und Kohlenmonoxid (CO) als erwünschte Komponenten sowie Metallcarbonyle, Schwefelwasserstoff (H₂S) und Kohlendioxid (CO₂) als zu entfernende Komponenten enthält. Im Kopfbereich der Absorptionskolonne 201 wird regeneriertes Methanol über Leitung 244 und Flüssigkeitsverteiler 202 aufgegeben und fällt in der Absorptionskolonne 201 fein verteilt nach unten, wobei es unerwünschte Bestandteile aus dem Rohsynthesegas aufnimmt. Das Rohsynthesegas durchströmt die Absorptionskolonne 201 von unten nach oben. Gereinigtes Synthesegas verlässt die Absorptionskolonne über Leitung 203.

Absorptionskolonne 201 verfügt zumindest über einen sogenannten prewash Bereich und einen Bereich zur Entschwefelung. Der untere prewash Bereich dient hauptsächlich der Entfernung von Cyanwasserstoff (HCN), weiterer Spurenbestandteile wie Carbonylsulfid (COS) sowie Schwefelwasserstoff (H₂S). Der obere Bereich dient hauptsächlich der Entschwefelung, das heißt der Entfernung von Schwefelwasserstoff (H₂S) sowie der Entfernung von Kohlendioxid (CO₂). Beide Bereiche sind durch einen gasdurchlässigen Kaminboden 214 voneinander getrennt.

Aus dem unteren prewash Bereich wird über Leitung 204 hauptsächlich mit H₂S und HCN beladenes Methanol abgezogen, das aufgrund der bezüglich der Metallcarbonyle besseren Löslichkeit von Eisencarbonylen gegenüber Nickelcarbonylen in Methanol hauptsächlich Eisencarbonyle enthält. Das hauptsächlich mit H₂S, HCN und Eisencarbonylen belade Methanol wird im indirekten Wärmetauscher 205 erwärmt und über Leitung 206 und Entspannungsventil 207 in den Entspannungsbehälter 208 hinein auf einen Druck von 12 bar entspannt. Das dabei entweichende Entspannungsgas enthält auch CO, wodurch aufgrund der Gleichgewichtsverschiebung in der Gleichgewichtsreaktion im beladenen Methanol enthaltene Eisencarbonyle mit dem im beladenen Methanol enthaltenen H₂S zu Eisensulfiden umgesetzt werden. Um das Austreiben von CO zu verstärken wird über die Leitung 209 Stickstoff als Stripp-Gas zugeführt. Die über Leitung 210 abgezogenen Gase werden über Verdichter 211 auf 40 bar rückverdichtet, über Leitung 212 dem indirekten Wärmetauscher 205 zum Kühlen zugeführt und anschließend als Recycle-Gasstrom über Leitung 213 mit dem Roh-Synthesegasstrom in Leitung 200 zusammengeführt. Das in dem Entspannungsbehälter 208 wenigstens teilweise von CO befreite Methanol wird über Leitung 215 einem indirekten Wärmetauscher 216 zugeführt, im Wärmetauscher 216 erwärmt und über Leitung 217 dem Verweilzeitbehälter 218 zugeführt.

Aus dem oberen der Entschwefelung dienenden Bereich der Absorptionskolonne 201 wird über Leitung 219 ein mit H₂S und CO₂ beladenes Methanol abgezogen, das aufgrund der bezüglich der Metallcarbonyle schlechteren Löslichkeit von Nickelcarbonylen gegenüber Eisencarbonylen in Methanol hauptsächlich Nickelcarbonyle enthält. Das hauptsächlich mit H₂S, CO₂ und Nickelcarbonylen beladene Methanol wird im indirekten Wärmetauscher 220 erwärmt und über Leitung 221 und Entspannungsventil 222 in den Entspannungsbehälter 223 hinein auf einen Druck von 12 bar entspannt. Das dabei entweichende Entspannungsgas enthält auch CO, wodurch aufgrund der Gleichgewichtsverschiebung im beladenen Methanol enthaltene Nickelcarbonyle mit dem im beladenen Methanol enthaltenen H₂S zu Nickelsulfiden umgesetzt werden. Um das Austreiben von CO zu verstärken wird über Leitung 224 Stickstoff als Stripp-Gas zugeführt. Die über die Leitung 225 abgezogenen Gase werden durch Verdichter 226 auf 40 bar rückverdichtet, über Leitung 227 dem indirekten Wärmetauscher 220 zum Kühlen zugeführt und anschließend als Recycle-Gasstrom über Leitung 228 mit dem Rohsynthesegasstrom in Leitung 200 zusammengeführt. Das in Entspannungsbehälter 223 wenigstens teilweise von CO befreite Methanol wird über Leitung 229 einem indirekten Wärmetauscher 230 zugeführt, im Wärmetauscher 230 erwärmt und über Leitung 231 dem Verweilzeitbehälter 232 zugeführt.

Durch Austreiben von CO in den Entspannungsbehältern 208 und 223 und zusätzliches Erwärmen des jeweiligen beladenen Methanols in den indirekten Wärmetauschern 216 und 230 wird die Bildung von Eisen- beziehungsweise Nickelsulfid aus den jeweiligen Metallcarbonylen begünstigt. Verweilzeitbehälter 218 und 232 verfügen jeweils über eine Reaktionszone sowie eine Absetzzone. Beladenes Methanol wird so lange durch die Reaktionszone geleitet wie für die weitgehend vollständige Fällung des jeweiligen Metallsulfids erforderlich. Im Falle des Eisensulfids beträgt die Verweilzeit circa 4 Stunden, im Falle des Nickelsulfids circa 50 Minuten. Anschließend gelangen die ausgefällten Metallsulfide in die jeweiligen Absetzzonen der Verweilzeitbehälter 218 und 232, die wie im Beispiel der Figur 2 dargestellt als konische Böden ausgeführt sind, in denen sich die jeweiligen Metallsulfide und ein Anteil des beladenen Methanols als erste Suspension sammeln. Der größere Teil des beladenen Methanols, der keine oder nur sehr wenige Metallsulfide enthaltende Überstand, wird aus den Verweilzeitbehältern 218, 232 über die Leitungen 233 beziehungsweise 234 abgezogen und einer Kolonne zur Heißregenerierung zugeführt (nicht gezeigt).

Sulfidschlamm aus Verweilzeitbehälter 218, die einen Teil des beladenen Methanols und in diesem Fall hauptsächlich Eisensulfid enthaltende erste Suspension, wird über Leitung 235 Aufbereitungsbehälter 240 bei einem Druck von 10 bar und einer Temperatur von 90 °C zugeführt. Die erste Suspension aus Verweilzeitbehälter 218 durchströmt den Aufbereitungsbehälter nach Aufgabe über den Stutzen 241 von oben nach unten. Parallel dazu wird Sulfidschlamm aus Verweilzeitbehälter 232, die einen Teil des Methanols und in diesem Fall hauptsächlich Nickelsulfid enthaltende erste Suspension, dem Aufbereitungsbehälter 240 über Leitung 236 bei einem Druck von 10 bar und einer Temperatur von 90 °C zugeführt.

Dabei ist der Zulauf der Leitung 235 vom Verweilzeitbehälter 218 zum Aufbereitungsbehälter 240 oberhalb des Zulaufs der Leitung 236 vom Verweilzeitbehälter 232 zum Aufbereitungsbehälter 240 angeordnet. Bezogen auf die Gesamtmenge Metallsulfide im Verweilzeitbehälter 218 enthält die erste Suspension aus Verweilzeitbehälter 218 im Wesentlichen Eisensulfide. Bezogen auf die Gesamtmenge Metallsulfide im Verweilzeitbehälter 232 enthält die erste Suspension aus Verweilzeitbehälter 232 im Wesentlichen Nickelsulfide.

Neben der Zuführung der ersten Suspensionen aus den Verweilzeitbehältern 218 und 232 wird Aufbereitungsbehälter 240 über Leitung 237 Wasserdampf bei einem Druck von 8 bar und einer Temperatur von 283 °C zugeführt. Der Wasserdampf durchströmt den Aufbereitungsbehälter von unten nach oben, so dass die ersten Suspensionen aus den Verweilzeitbehältern 218, 232 und der Wasserdampf im Gegenstromverfahren in unmittelbarem Kontakt stehen, so dass ein Stoff- und Wärmetausch zwischen Wasserdampf und ersten Suspensionen ermöglicht wird. Aufgrund des Stoff- und Wärmetauschs zwischen ersten Suspensionen und Wasserdampf gehen die Metallsulfide in die wässrige Phase über, werden also in die wässrige Phase umgefällt und bilden dort größere Agglomerate, die eine stärkere Sedimentationsneigung aufweisen als Metallsulfide in methanolischer Suspension (erste Suspension).

Dabei sind die Zulaufstutzen 241, 242 der Leitungen 235 und 236 zum Aufbereitungsbehälter 240 so angeordnet, dass die im Wesentlichen Eisensulfid aufweisende erste Suspension aus Verweilzeitbehälter 218 länger in unmittelbarem Kontakt mit dem Wasserdampf aus Leitung 237 steht als dies bei der im Wesentlichen Nickelsulfid aufweisenden ersten Suspension aus Verweilzeitbehälter 232 der Fall ist. Im gezeigten Beispiel ist der Zulaufstutzen der Leitung 235 für diesen Zweck oberhalb des Zulaufstutzens der Leitung 236 angeordnet, so dass der Stutzen 241 ebenfalls oberhalb des Stutzens 242 angeordnet ist. Die Stutzen 241, 242 befinden sich im Hinblick auf die Höhen-Anordnung auf dem gleichen Niveau wie die jeweiligen Zuläufe der Leitungen 235, 236. Durch Wasserdampf aus Leitung 237 wird Schwefelwasserstoff aus dem beladenen Methanol ausgetrieben (gestrippt). Ausgetriebener Schwefelwasserstoff verlässt Aufbereitungsbehälter 240 über Leitung 238. Neben Schwefelwasserstoff enthält gasförmiges Produkt in Leitung 238 auch dampfförmiges Methanol, das aufgrund der Wärmeübertragung des Wasserdampfs auf beladenes Methanol der ersten Suspension erhalten wird. Gasförmiges Produkt in Leitung 238, welches einen Druck von 6,5 bar und eine Temperatur von 129 °C aufweist, wird anschließend einem mehrstufigen Verfahren zur Auskondensation des dampfförmigen Methanols unterworfen (nicht gezeigt). Das dabei hauptsächlich Schwefelwasserstoff aufweisende erhaltene Produkt, auch als Claus-Gas bezeichnet, kann anschließend einer Claus-Anlage zur Herstellung von Schwefel zugeführt werden.

Aus dem Sumpfbereich 243 des Aufbereitungsbehälters 240 wird die Wasser, Methanol und Metallsulfide aufweisende zweite Suspension bei einem Druck von 7 bar und einer Temperatur von 143 °C über Leitung 239 analog dem Beispiel aus Figur 1 einer Rektifikationskolonne (nicht gezeigt) zugeführt. Dabei findet in der Rektifikationskolonne analog dem Beispiel nach Figur 1 eine thermische Abtrennung des Methanols von der zweiten Suspension statt. Es wird als Sumpfprodukt ein Sulfidschlamm aus Metallsulfiden und Wasser erhalten, der aus der Rektifikationskolonne abgezogen und der Entsorgung zugeführt wird. Die Aufarbeitung des Kopfprodukts der Rektifikation erfolgt analog dem Beispiel gemäß Figur 1. Heißregeneriertes Methanol wird schließlich über Leitung 244 sowie Flüssigkeitsverteiler 202 der Absorptionskolonne 201 zugeführt und erneut zur Absorption von nicht gewünschten Bestandteilen aus Rohsynthesegas verwendet.

Ausführungsformen der Erfindung werden unter Bezugnahme auf verschiedene Arten von Gegenständen beschrieben. Insbesondere werden bestimmte Ausführungsformen unter Bezugnahme auf Ansprüche des Verfahrenstyps beschrieben, während andere Ausführungsformen unter Bezugnahme auf die Ansprüche des Vorrichtungstyps beschrieben werden. Ein Fachmann wird jedoch aus der obigen und der folgenden Beschreibung entnehmen, dass, außer anders angegeben, zusätzlich zu irgendeiner Kombination von Merkmalen, die zu einer Art von Gegenstand gehören, auch jede Kombination zwischen Merkmalen in Bezug auf verschiedene Gegenstände in Betracht gezogen werden kann. Alle Merkmale können kombiniert werden um synergetische Effekte zu erzielen, welche über die einfache Summierung der technischen Merkmale hinausgehen.

Während die Erfindung im Detail in den Zeichnungen und der vorhergehenden Beschreibung dargestellt und beschrieben wurde, sollen eine solche Darstellung und Beschreibung als veranschaulichend oder beispielhaft und nicht einschränkend betrachtet werden. Die Erfindung ist nicht auf die offenbarten Ausführungsformen beschränkt. Andere Variationen der offenbarten Ausführungsformen können von einem Fachmann auf dem Gebiet der beanspruchten Erfindung aus einem Studium der Zeichnungen, der Offenbarung und der abhängigen Ansprüche verstanden und ausgeführt werden.

In den Ansprüchen schließt das Wort "aufweisend" oder "umfassend" weitere Elemente oder Schritte nicht aus, und der unbestimmte Artikel "ein" oder "eine" schließt eine Mehrzahl nicht aus. Bezugszeichen in den Ansprüchen sollten nicht so ausgelegt werden, dass sie den Umfang der Ansprüche einschränken.

### Bezugszeichenliste

- 1, 2: Erfindungsgemäßes Verfahren oder Vorrichtung
- 100: Leitung
- 101: Absorptionskolonne
- 102: Flüssigkeitsverteiler
- 103: Sumpfbereich der Absorptionskolonne
- 104: Leitung
- 105: Indirekter Wärmetauscher
- 106: Leitung
- 107: Entspannungsventil
- 108: Entspannungsbehälter
- 109: Leitung
- 110: Leitung
- 111: Verdichter
- 112: Leitung
- 113: Leitung
- 114: Leitung
- 115: Leitung
- 116: Indirekter Wärmetauscher
- 117: Leitung
- 118: Verweilzeitbehälter
- 119: Leitung
- 120: Kolonne zur Heißregenerierung
- 121: Leitung
- 122: Aufbereitungsbehälter
- 123: Stutzen
- 124: Leitung
- 125: Leitung
- 126: Sumpfbereich des Aufbereitungsbehälters
- 127: Leitung
- 128: Pumpe
- 129: Rektifikationskolonne
- 130: Leitung
- 131: Leitung
- 132: Indirekter Wärmetauscher
- 133: Leitung
- 200: Leitung
- 201: Absorptionskolonne
- 202: Flüssigkeitsverteiler
- 203: Leitung
- 204: Leitung
- 205: Indirekter Wärmetauscher
- 206: Leitung
- 207: Entspannungsventil
- 208: Entspannungsbehälter
- 209: Leitung
- 210: Leitung
- 211: Verdichter
- 212: Leitung
- 213: Leitung
- 214: Kaminboden
- 215: Leitung
- 216: Indirekter Wärmetauscher
- 217: Leitung
- 218: Verweilzeitbehälter
- 219: Leitung
- 220: Indirekter Wärmetauscher
- 221: Leitung
- 222: Entspannungsventil
- 223: Entspannungsbehälter
- 224: Leitung
- 225: Leitung
- 226: Verdichter
- 227: Leitung
- 228: Leitung
- 229: Leitung
- 230: Indirekter Wärmetauscher
- 231: Leitung
- 232: Verweilzeitbehälter
- 233: Leitung
- 234: Leitung
- 235: Leitung
- 236: Leitung
- 237: Leitung
- 238: Leitung
- 239: Leitung
- 240: Aufbereitungsbehälter
- 241: Stutzen
- 242: Stutzen
- 243: Sumpfbereich des Aufbereitungsbehälters
- 244: Leitung

## Patentansprüche

1. Verfahren zur Abtrennung von Metallcarbonylen aus einem Gasgemisch, bei dem das Gasgemisch einer Gaswäsche in einem Absorber mit Methanol als physikalisch wirkender Waschflüssigkeit unterzogen wird, wobei beladenes Methanol erhalten wird, und bei dem die Metalle der Metallcarbonyle zumindest teilweise als Metallsulfide aus dem beladenen Methanol ausgefällt werden, wobei eine erste Suspension erhalten wird, die die Metallsulfide und zumindest einen Anteil des beladenen Methanols aufweist,
und die erste Suspension einem Aufbereitungsbehälter zugeführt wird, **dadurch gekennzeichnet, dass**
die erste Suspension in dem Aufbereitungsbehälter im Gegenstromverfahren in direkten Kontakt mit Wasserdampf gebracht wird, wodurch eine wenigstens Wasser, Methanol und Metallsulfide aufweisende zweite Suspension und ein gasförmiges Produkt erhalten werden, und die zweite Suspension und das gasförmige Produkt als getrennte Ströme aus dem Aufbereitungsbehälter abgezogen werden.

2. Verfahren nach Anspruch 1, **dadurch gekennzeichnet, dass** die einen Anteil des beladenen Methanols aufweisende erste Suspension dem Aufbereitungsbehälter zugeführt wird, und der Rest des beladenen Methanols einer Regenerierung zugeführt wird, bevorzugt einer Heißregenerierung zugeführt wird.

3. Verfahren nach Anspruch 1 oder 2, **dadurch gekennzeichnet, dass** das gasförmige Produkt ein Gemisch aus Schwefelwasserstoff (H₂S) und Methanol-Dampf aufweist.

4. Verfahren nach Anspruch 3, **dadurch gekennzeichnet, dass** Methanol aus dem Methanol-Dampf des gasförmigen Produkts auskondensiert wird, und der verbleibende Schwefelwasserstoff (H₂S) zur weiteren Verarbeitung einer Claus-Anlage zugeführt wird.

5. Verfahren nach einem der vorherigen Ansprüche, **dadurch gekennzeichnet, dass** das gasförmige Produkt aus einem Kopf-Bereich des Aufbereitungsbehälters abgezogen wird und/oder die zweite Suspension aus einem Sumpf-Bereich des Aufbereitungsbehälters abgezogen wird.

6. Verfahren nach einem der vorherigen Ansprüche, **dadurch gekennzeichnet, dass** die zweite Suspension einer Destillation zugeführt wird, insbesondere einer Gegenstromdestillation, wobei im Wesentlichen reines Methanol als Kopfprodukt und ein im Wesentlichen Metallsulfide und Wasser aufweisendes Gemisch als Sumpfprodukt erhalten werden.

7. Verfahren nach einem der vorherigen Ansprüche, **dadurch gekennzeichnet, dass** die erste Suspension dem Aufbereitungsbehälter aus wenigstens einem Verweilzeitbehälter zugeführt wird.

8. Verfahren nach einem der vorherigen Ansprüche, **dadurch gekennzeichnet, dass** die erste Suspension dem Aufbereitungsbehälter aus wenigstens zwei separaten Verweilzeitbehältern zugeführt wird.

9. Verfahren nach Anspruch 8, **dadurch gekennzeichnet, dass** die erste Suspension in einem ersten der wenigstens zwei separaten Verweilzeitbehältern im Wesentlichen Eisensulfide aufweist und die erste Suspension in einem zweiten der wenigsten zwei separaten Verweilzeitbehälter im Wesentlichen Nickelsulfide aufweist.

10. Verfahren nach Anspruch 9, **dadurch gekennzeichnet, dass** ein Zulauf des ersten Verweilzeitbehälters zum Aufbereitungsbehälter oberhalb eines Zulaufs des zweiten Verweilzeitbehälters zum Aufbereitungsbehälter angeordnet ist.

11. Verfahren nach einem der vorherigen Ansprüche, **dadurch gekennzeichnet, dass** das Ausfällen der Metallsulfide aus den in dem beladenen Methanol enthaltenen Metallcarbonylen durch Desorption von Kohlenmonoxid (CO) aus dem beladenen Methanol und/oder durch Temperaturerhöhung des beladenen Methanols bewirkt wird.

12. Verfahren nach Anspruch 11, **dadurch gekennzeichnet, dass** die Desorption des Kohlenmonoxid (CO) in einem Entspannungsbehälter durch Druckentspannung (flashen) des beladenen Methanols erfolgt.

13. Verfahren nach Anspruch 12, soweit auf einen der Ansprüche 7 bis 10 rückbezogen, **dadurch gekennzeichnet, dass** das beladene Methanol nach der Druckentspannung dem wenigstens einen Verweilzeitbehälter zugeführt wird, wobei sich die erste Suspension im wenigstens einen Verweilzeitbehälter bildet.

14. Verfahren nach einem der vorherigen Ansprüche, **dadurch gekennzeichnet, dass** der Wasserdampf dem Aufbereitungsbehälter in einem unteren Bereich des Aufbereitungsbehälters zugeführt wird, insbesondere einem Sumpfbereich des Aufbereitungsbehälters zugeführt wird.

15. Verfahren nach einem der vorherigen Ansprüche, **dadurch gekennzeichnet, dass** das Gasgemisch ein Synthesegas umfasst, wobei das Synthesegas als Bestandteile wenigstens Wasserstoff (H₂), Kohlenmonoxid (CO), Kohlendioxid (CO₂), Schwefelwasserstoff (H₂S) und Metallcarbonyle umfasst.

16. Vorrichtung zur Abtrennung von Metallcarbonylen aus einem Gasgemisch, in der das Gasgemisch einer Gaswäsche mit Methanol als physikalisch wirkender Waschflüssigkeit unterzogen wird, und in der die Metalle der Metallcarbonyle zumindest teilweise als Metallsulfide aus beladenem Methanol ausfällbar sind, aufweisend folgende miteinander in Fluidverbindung bestehende Bestandteile:
Einen Aufbereitungsbehälter, umfassend
Mittel zum Zuführen von Dampf zu dem Aufbereitungsbehälter und
Mittel zum Zuführen einer beladenes Methanol und Metallsulfide aufweisenden ersten Suspension zum Aufbereitungsbehälter, wobei
die Mittel zum Zuführen des Dampfs und die Mittel zum Zuführen der ersten Suspension so angeordnet sind, dass der Dampf und die erste Suspension innerhalb des Aufbereitungsbehälters im Gegenstrom und in direktem Kontakt unter Stoffaustausch zueinander bewegbar sind;
Mittel zum Abziehen eines gasförmigen Produkts aus dem Aufbereitungsbehälter;
Mittel zum Abziehen einer Wasser, Methanol und Metallsulfide aufweisenden zweiten Suspension aus dem Aufbereitungsbehälter.

17. Vorrichtung nach Anspruch 16, **dadurch gekennzeichnet, dass** die Vorrichtung wenigstens einen mit den Mitteln zur Zuführung der ersten Suspension zum Aufbereitungsbehälter in Verbindung stehenden Verweilzeitbehälter aufweist, wobei der Verweilzeitbehälter eine Reaktions- und Absetzzone zum Ausfällen der Metallsulfide aus den Metallcarbonylen aufweist, in der die erste Suspension erzeugbar ist.

18. Vorrichtung nach Anspruch 17, **dadurch gekennzeichnet, dass** die Vorrichtung mindestens zwei separate Verweilzeitbehälter und mit den jeweiligen Verweilzeitbehältern in Verbindung stehende, separate Mittel zur Zuführung der ersten Suspension zum Aufbereitungsbehälter aufweist, wobei in einem ersten Verweilzeitbehälter eine im Wesentlichen Eisensulfide aufweisende erste Suspension erzeugbar ist, und in einem zweiten Verweilzeitbehälter eine im Wesentlichen Nickelsulfide aufweisende erste Suspension erzeugbar ist, wobei die separaten Mittel zur Zuführung der ersten Suspension zum Aufbereitungsbehälter ein erstes und ein zweites Mittel zur Zuführung der ersten Suspensionen zum Aufbereitungsbehälter umfassen, wobei über das erste Mittel die im Wesentlichen Eisensulfide aufweisende erste Suspension dem Aufbereitungsbehälter zuführbar ist und über das zweite Mittel die im Wesentlichen Nickelsulfide aufweisende erste Suspension dem Aufbereitungsbehälter zuführbar ist, wobei das erste Mittel im Bereich der Zuführung zum Aufbereitungsbehälter oberhalb des zweiten Mittels angeordnet ist.

19. Verwendung eines Verfahrens nach einem der Ansprüche 1 bis 15 oder einer Vorrichtung nach einem der Ansprüche 16 bis 18 in einem Gaswäscheverfahren mit Methanol als Waschflüssigkeit zur Abtrennung von Metallcarbonylen und Schwefelwasserstoff (H₂S) aus einem wenigstens die Bestandteile Wasserstoff (H₂), Kohlenmonoxid (CO), Kohlendioxid (CO₂), Schwefelwasserstoff (H₂S) und Metallcarbonyle aufweisenden Roh-Synthesegases.
